# EUROPEAN PATENT APPLICATION

(11) **EP 4 676 143 A1**
(43) Date of publication of application: **07.01.2026**
(21) Application number: 24763057.7
(22) Date of filing: 23.02.2024
(51) Int. Cl.: H04W 72/12

(54) **METHOD AND APPARATUS USED IN NODE FOR WIRELESS COMMUNICATION**

(30) Priority: 28.02.2023 CN 202310184126
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/078263
(87) International publication number: WO 2024/179375

(57) **Abstract**

Disclosed in the present application are a method and apparatus used in a node for wireless communication. The method comprises: a first receiver receiving a first PDCCH; and a first transmitter sending at least one first PUSCH in the first PUSCH and a second PUSCH, wherein the first PDCCH is used for scheduling the first PUSCH, and the second PUSCH is a configured grant PUSCH; and whether the configured grant for the second PUSCH is transmitted to a first HARQ entity is related to both whether the configured grant for the second PUSCH and the first PDCCH are associated with different coresetPoolIndex values, and whether the second PUSCH overlaps with the first PUSCH in time domain.

## Description

### Technical Field

The present application relates to transmission methods and apparatuses in wireless communication systems, in particular to transmission methods and apparatuses for wireless signals in wireless communication systems supporting cellular networks.

### Background Art

In an uplink, enhancing configured grants is an effective means of improving the transmission efficiency.

### Summary of the Invention

When enhancing configured grants, a relationship between a PUSCH of a configured grant and a PUSCH scheduled by a PDCCH is an important problem that needs to be considered; the present application discloses a solution for the above problem. The present application can be applicable to various wireless communication scenarios, such as a single-TRP (Transmit/Receive Point) transmission, a multiple-TRP transmission, a single-panel transmission, and a multi-panel transmission, and achieves similar technical effects. In addition, adopting a unified solution in different scenarios (including but not limited to the single-TRP transmission, the multiple-TRP transmission, the single-panel transmission, and the multi-panel transmission) can also help to reduce the hardware complexity and costs or improve the performance. In the absence of conflicts, embodiments and features in the embodiments in any node of the present application may be applied to any other node. In the absence of conflicts, the embodiments and features in the embodiments of the present application may be arbitrarily combined with each other.

As one embodiment, an explanation of a terminology in the present application refers to definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definitions in the specification protocol of IEEE (Institute of Electrical and Electronics Engineers).

The present application discloses a method used in a first node for wireless communication, characterized by comprising:
receiving a first PDCCH; and
sending at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain.

As one embodiment, benefits of the above method comprise: improving the uplink transmission performance.

As one embodiment, the benefits of the above method comprise: improving the processing efficiency of a PUSCH.

As one embodiment, the benefits of the above method comprise: saving the storage overhead.

As one embodiment, the benefits of the above method comprise: avoiding some situations where a delivery of configured grants is improperly abandoned.

As one embodiment, the benefits of the above method comprise: optimizing the system design to support different user equipment.

As one embodiment, the benefits of the above method comprise: good compatibility.

As one embodiment, the benefits of the above method comprise: small changes to existing 3GPP standards and low workload required for standardization.

According to one aspect of the present application, the above method is characterized in that:
whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

According to one aspect of the present application, the above method is characterized in that:
when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

As one embodiment, the benefits of the above method comprise: ensuring the transmission performance of the PUSCH of the configured grant.

According to one aspect of the present application, the above method is characterized by comprising:
sending the second PUSCH,
wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

According to one aspect of the present application, the above method is characterized in that:
when the configured grant for the second PUSCH and the first PDCCH are associated with different coresetPoolIndex values, the first PUSCH is not the Type 1 PUSCH.

According to one aspect of the present application, the above method is characterized in that:
when the configured grant for the second PUSCH and the first PDCCH are not associated with different coresetPoolIndex values, the first PUSCH is the Type 1 PUSCH.

According to one aspect of the present application, the above method is characterized in that:
when the second PUSCH overlaps with the Type 1 PUSCH in the time domain, the configured grant for the second PUSCH is not delivered to the first HARQ entity.

As one embodiment, the benefits of the above method comprise: saving the storage overhead.

The present application discloses a method used in a second node for wireless communication, characterized by comprising:
sending a first PDCCH; and
receiving at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain.

According to one aspect of the present application, the above method is characterized in that:
whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

According to one aspect of the present application, the above method is characterized in that:
when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

According to one aspect of the present application, the above method is characterized by comprising:
receiving the second PUSCH,
wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

According to one aspect of the present application, the above method is characterized in that:
when the configured grant for the second PUSCH and the first PDCCH are associated with different coresetPoollndex values, the first PUSCH is not the Type 1 PUSCH.

According to one aspect of the present application, the above method is characterized in that:
when the configured grant for the second PUSCH and the first PDCCH are not associated with different coresetPoolIndex values, the first PUSCH is the Type 1 PUSCH.

According to one aspect of the present application, the above method is characterized in that:
when the second PUSCH overlaps with the Type 1 PUSCH in the time domain, the configured grant for the second PUSCH is not delivered to the first HARQ entity.

The present application discloses a first node for wireless communication, characterized by comprising:
a first receiver receiving a first PDCCH; and
a first transmitter sending at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain.

The present application discloses a second node for wireless communication, characterized by comprising:
a second transmitter sending a first PDCCH; and
a second receiver receiving at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain.

The present application discloses a method used in a first node for wireless communication, characterized by comprising:
receiving a first PDCCH; and
sending at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is ignored by a first HARQ entity is related to both whether the configured grant for the second PUSCH and the first PDCCH are associated with different coresetPoolIndex values, and whether the second PUSCH overlaps with the first PUSCH in a time domain.

As one embodiment, benefits of the above method comprise: improving the uplink transmission performance.

As one embodiment, the benefits of the above method comprise: improving the flexibility of processing.

As one embodiment, the benefits of the above method comprise: avoiding some situations where configured grants are improperly ignored.

As one embodiment, the benefits of the above method comprise: optimizing the system design to support different user equipment.

As one embodiment, the benefits of the above method comprise: good compatibility.

As one embodiment, the benefits of the above method comprise: small changes to existing 3GPP standards and low workload required for standardization.

According to one aspect of the present application, the above method is characterized in that:
whether the configured grant for the second PUSCH is ignored by the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

According to one aspect of the present application, the above method is characterized in that:
when the second PUSCH overlaps with the Type 1 PUSCH in the time domain, the configured grant for the second PUSCH is ignored by the first HARQ entity; and whether the first PUSCH is the Type 1 PUSCH is related to whether the configured grant for the second PUSCH and the first PDCCH are associated with different coresetPoolIndex values.

According to one aspect of the present application, the above method is characterized in that:
when the configured grant for the second PUSCH and the first PDCCH are associated with different coresetPoollndex values, the first PUSCH is not the Type 1 PUSCH.

According to one aspect of the present application, the above method is characterized in that:
when the configured grant for the second PUSCH and the first PDCCH are not associated with different coresetPoollndex values, the first PUSCH is the Type 1 PUSCH.

According to one aspect of the present application, the above method is characterized in that:
when the second PUSCH does not overlap with the Type 1 PUSCH in the time domain, the configured grant for the second PUSCH is not ignored by the first HARQ entity.

According to one aspect of the present application, the above method is characterized in that:
the configured grant for the second PUSCH is delivered to the first HARQ entity.

As one embodiment, the benefits of the above method comprise: improving the flexibility of processing.

The present application discloses a method used in a second node for wireless communication, characterized by comprising:
sending a first PDCCH; and
receiving at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is ignored by a first HARQ entity is related to both whether the configured grant for the second PUSCH and the first PDCCH are associated with different coresetPoolIndex values, and whether the second PUSCH overlaps with the first PUSCH in a time domain.

According to one aspect of the present application, the above method is characterized in that:
whether the configured grant for the second PUSCH is ignored by the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoollndex values.

According to one aspect of the present application, the above method is characterized in that:
when the second PUSCH overlaps with the Type 1 PUSCH in the time domain, the configured grant for the second PUSCH is ignored by the first HARQ entity; and whether the first PUSCH is the Type 1 PUSCH is related to whether the configured grant for the second PUSCH and the first PDCCH are associated with different coresetPoolIndex values.

According to one aspect of the present application, the above method is characterized in that:
when the configured grant for the second PUSCH and the first PDCCH are associated with different coresetPoollndex values, the first PUSCH is not the Type 1 PUSCH.

According to one aspect of the present application, the above method is characterized in that:
when the configured grant for the second PUSCH and the first PDCCH are not associated with different coresetPoolIndex values, the first PUSCH is the Type 1 PUSCH.

According to one aspect of the present application, the above method is characterized in that:
when the second PUSCH does not overlap with the Type 1 PUSCH in the time domain, the configured grant for the second PUSCH is not ignored by the first HARQ entity.

According to one aspect of the present application, the above method is characterized in that:
the configured grant for the second PUSCH is delivered to the first HARQ entity.

The present application discloses a first node for wireless communication, characterized by comprising:
a first receiver receiving a first PDCCH; and
a first transmitter sending at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is ignored by a first HARQ entity is related to both whether the configured grant for the second PUSCH and the first PDCCH are associated with different coresetPoolIndex values, and whether the second PUSCH overlaps with the first PUSCH in a time domain.

According to one aspect of the present application, the above method is characterized in that:
whether the configured grant for the second PUSCH is ignored by the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

According to one aspect of the present application, the above method is characterized in that:
when the second PUSCH overlaps with the Type 1 PUSCH in the time domain, the configured grant for the second PUSCH is ignored by the first HARQ entity; and whether the first PUSCH is the Type 1 PUSCH is related to whether the configured grant for the second PUSCH and the first PDCCH are associated with different coresetPoolIndex values.

According to one aspect of the present application, the above method is characterized in that:
when the configured grant for the second PUSCH and the first PDCCH are associated with different coresetPoollndex values, the first PUSCH is not the Type 1 PUSCH.

According to one aspect of the present application, the above method is characterized in that:
when the configured grant for the second PUSCH and the first PDCCH are not associated with different coresetPoolIndex values, the first PUSCH is the Type 1 PUSCH.

According to one aspect of the present application, the above method is characterized in that:
when the second PUSCH does not overlap with the Type 1 PUSCH in the time domain, the configured grant for the second PUSCH is not ignored by the first HARQ entity.

According to one aspect of the present application, the above method is characterized in that:
the configured grant for the second PUSCH is delivered to the first HARQ entity.

The present application discloses a second node for wireless communication, characterized by comprising:
a second transmitter sending a first PDCCH; and
a second receiver receiving at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is ignored by a first HARQ entity is related to both whether the configured grant for the second PUSCH and the first PDCCH are associated with different coresetPoollndex values, and whether the second PUSCH overlaps with the first PUSCH in a time domain.

### Brief Description of the Drawings

Other features, objectives and advantages of the present application will become more apparent by reading the detailed description of non-limiting embodiments with reference to the following drawings:
FIG. 1 shows a processing flowchart of a first node according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first communication device and a second communication device according to one embodiment of the present application;
FIG. 5 shows a flowchart of a signal transmission according to one embodiment of the present application;
FIG. 6 shows a schematic diagram explaining that a configured grant for a second PUSCH is delivered to a first HARQ entity according to one embodiment of the present application;
FIG. 7 shows a schematic diagram explaining that a configured grant for a second PUSCH is delivered to a first HARQ entity according to one embodiment of the present application;
FIG. 8 shows a processing flowchart of a first node according to one embodiment of the present application;
FIG. 9 shows a flowchart of a signal transmission according to one embodiment of the present application;
FIG. 10 shows a schematic diagram explaining that a configured grant for a second PUSCH is not ignored by a first HARQ entity according to one embodiment of the present application;
FIG. 11 shows a schematic diagram explaining a relationship between a first PUSCH and a Type 1 PUSCH according to one embodiment of the present application;
FIG. 12 shows a structural block diagram of a processing apparatus in a first node device according to one embodiment of the present application; and
FIG. 13 shows a structural block diagram of a processing apparatus in a second node device according to one embodiment of the present application.

### Detailed Description of Embodiments

The technical solution of the present application will be further described in detail below with reference to drawings. It should be noted that in the absence of conflicts, embodiments and features in the embodiments of the present application may be arbitrarily combined with each other.

### Embodiment 1

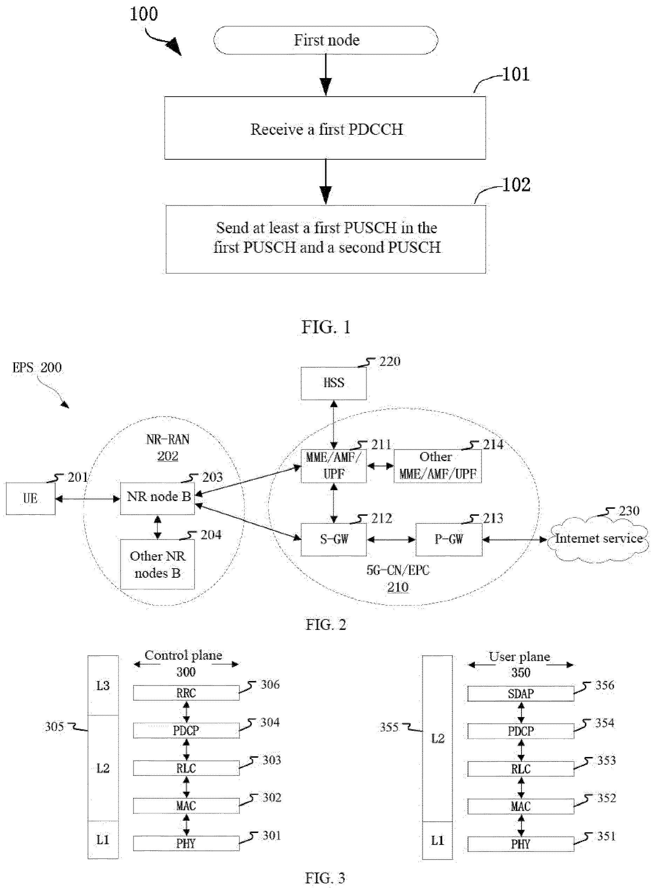

Embodiment 1 illustrates a processing flowchart of a first node according to one embodiment of the present application, as shown in FIG. 1.

In Embodiment 1, the first node in the present application receives a first PDCCH in step 101; and sends at least a first PUSCH in the first PUSCH and a second PUSCH in step 102.

In Embodiment 1, the first PDCCH is used for scheduling the first PUSCH, and the second PUSCH is a PUSCH of a configured grant; and whether the configured grant for the second PUSCH is delivered to a first HARQ entity is related to both whether the configured grant for the second PUSCH and the first PDCCH are associated with different coresetPoollndex values, and whether the second PUSCH overlaps with the first PUSCH in a time domain.

As one embodiment, the meaning of an expression "receives a first PDCCH" is: receiving DCI (Downlink control information) on the first PDCCH (physical downlink control channel).

As one embodiment, the meaning of the expression "receives a first PDCCH" is: receiving an uplink grant on the first PDCCH.

As one embodiment, the meaning of the expression "receives a first PDCCH" is: receiving contents of the first PDCCH.

As one embodiment, the meaning of an expression "the first PDCCH is used for scheduling the first PUSCH" is: the uplink grant for the first PUSCH is received on the first PDCCH.

As one embodiment, the first PUSCH (Physical uplink shared channel) is dynamically scheduled.

As one embodiment, the first PDCCH is used for receiving DCI, and the received DCI is used for scheduling the first PUSCH.

As one embodiment, the DCI received on the first PDCCH comprises scheduling information for the first PUSCH.

As one embodiment, the meaning of "sending one PUSCH (Physical uplink shared channel)" is: sending at least one of a transport block (TB) or a CSI (Channel state information) report on this PUSCH.

As one embodiment, the meaning of "sending one PUSCH (Physical uplink shared channel)" is: sending a signal on this PUSCH.

As one embodiment, the meaning of "sending one PUSCH" comprises: sending at least one of the transport block or the CSI report on this PUSCH.

As one embodiment, the meaning of "sending one PUSCH" comprises: sending the signal on this PUSCH, the signal being sent comprising an output of one bit block after undergoing at least channel coding, scrambling, modulation, layer mapping, precoding, mapping to a virtual resource block, and mapping from the virtual resource block to a physical resource block.

As one embodiment, the meaning of "sending one PUSCH" comprises: sending uplink information, this PUSCH being used for bearing the uplink information.

As one embodiment, the configured grant for the second PUSCH is a configured uplink grant.

As one embodiment, the configured grant for the second PUSCH is activated by an L1 (Layer 1) signaling.

As one embodiment, the configured grant for the second PUSCH is activated by a PDCCH.

As one embodiment, the configured grant for the second PUSCH is activated by DCI in the PDCCH.

As one embodiment, the configured grant for the second PUSCH is configured by an RRC.

As one embodiment, the configured grant for the second PUSCH is a Type 2 configured grant.

As one embodiment, the configured grant for the second PUSCH is a Type 1 configured grant.

As one embodiment, the configured grant for the second PUSCH is a part of a bundle of one configured uplink grant.

As one embodiment, the meaning of an expression "the second PUSCH being a PUSCH of a configured grant" is: the second PUSCH is the PUSCH of a first configured grant, and the first configured grant is a configured grant for the second PUSCH.

As one embodiment, the meaning of an expression "whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain" is: whether the configured grant for the second PUSCH is delivered to the first HARQ entity is related to whether the second PUSCH overlaps with the Type 1 PUSCH in the time domain, and whether the first PUSCH is the Type 1 PUSCH is related to whether the configured grant for the second PUSCH and the first PDCCH are associated with different coresetPoolIndex values.

As one embodiment, when the configured grant for the second PUSCH and the first PDCCH are not associated with different coresetPoollndex values and the second PUSCH overlaps with the first PUSCH in the time domain, the configured grant for the second PUSCH is not delivered to the first HARQ entity.

As one embodiment, when the configured grant for the second PUSCH and the first PDCCH are not associated with different coresetPoolIndex values: the second PUSCH does not overlap with the first PUSCH in the time domain and the configured grant for the second PUSCH is delivered to the first HARQ entity, or the configured grant for the second PUSCH is not delivered to the first HARQ entity.

As one embodiment, when the configured grant for the second PUSCH and the first PDCCH are associated with different coresetPoollndex values and the second PUSCH overlaps with the first PUSCH in the time domain and the second PUSCH does not overlap with the Type 1 PUSCH in the time domain, the configured grant for the second PUSCH is delivered to the first HARQ entity; and the Type 1 PUSCH is related to the coresetPoollndex value associated with the configured grant for the second PUSCH.

As one embodiment, if the second PUSCH does not overlap with the Type 1 PUSCH in the time domain, the configured grant for the second PUSCH is delivered to the first HARQ entity; otherwise, the configured grant for the second PUSCH is not delivered to the first HARQ entity; and whether the first PUSCH is the Type 1 PUSCH is related to whether the configured grant for the second PUSCH and the first PDCCH are associated with different coresetPoolIndex values.

As one embodiment, if the second PUSCH does not overlap with the Type 1 PUSCH in the time domain, the configured grant for the second PUSCH is not delivered to the first HARQ entity; otherwise, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

As one embodiment, whether the configured grant for the second PUSCH is delivered to the first HARQ entity depends on at least one of both whether the configured grant for the second PUSCH and the first PDCCH are associated with different coresetPoolIndex values, and whether the second PUSCH overlaps with the first PUSCH in the time domain.

As one embodiment, at least one of both whether the configured grant for the second PUSCH and the first PDCCH are associated with different coresetPoolIndex values and whether the second PUSCH overlaps with the first PUSCH in the time domain is used for determining whether the configured grant for the second PUSCH is delivered to the first HARQ entity.

As one embodiment, if the coresetPoollndex value associated with the configured grant for the second PUSCH is different from the coresetPoollndex value associated with the first PDCCH, then the configured grant for the second PUSCH and the first PDCCH are associated with different coresetPoollndex values; otherwise, the configured grant for the second PUSCH and the first PDCCH are not associated with different coresetPoolIndex values.

As one embodiment, when the coresetPoollndex value associated with the configured grant for the second PUSCH is different from the coresetPoollndex value associated with the first PDCCH, the configured grant for the second PUSCH and the first PDCCH are associated with different coresetPoolIndex values.

As one embodiment, when the coresetPoollndex value associated with the configured grant for the second PUSCH is the same as the coresetPoollndex value associated with the first PDCCH, the configured grant for the second PUSCH and the first PDCCH are not associated with different coresetPoolIndex values.

As one embodiment, when the first node is not configured with different coresetPoollndex values, the configured grant for the second PUSCH and the first PDCCH are not associated with different coresetPoolIndex values.

As one embodiment, the coresetPoolIndex value associated with the first PDCCH is: the coresetPoolIndex value of a ControlResourceSet used for configuring resources occupied by the first PDCCH.

As one embodiment, the coresetPoollndex value associated with the first PDCCH is: the coresetPoolIndex value of a control resource set (CORESET) to which resources occupied by the first PDCCH belong.

As one embodiment, the coresetPoollndex value associated with the first PDCCH is: the coresetPoolIndex value of the ControlResourceSet used for configuring a search for DCI detected in the first PDCCH.

As one embodiment, the coresetPoolIndex value associated with the first PDCCH is: the coresetPoolIndex value associated with the first PUSCH.

As one embodiment, the coresetPoollndex value associated with the first PDCCH is: the coresetPoolIndex value associated with the DCI for scheduling the first PUSCH.

As one embodiment, the coresetPoolIndex value associated with the first PDCCH is: the coresetPoolIndex value of the control resource set associated with the DCI for scheduling the first PUSCH.

As one embodiment, the coresetPoollndex value associated with the first PDCCH is: the coresetPoolIndex value associated with the DCI detected in the first PDCCH.

As one embodiment, the coresetPoollndex value associated with the first PDCCH is: the coresetPoolIndex value of the control resource set associated with the DCI detected in the first PDCCH.

As one embodiment, the coresetPoollndex value associated with the first PDCCH is: the coresetPoollndex value of the control resource set associated with the first PDCCH.

As one embodiment, the coresetPoollndex value associated with the first PDCCH is: the coresetPoolIndex value associated with an SRS (Sounding reference signal) resource set used for sending the first PUSCH.

As one embodiment, the coresetPoollndex value associated with the first PDCCH is: the coresetPoolIndex value associated with the SRS (Sounding reference signal) resource set used for the first PUSCH.

As one embodiment, the coresetPoollndex value associated with the first PDCCH is: the coresetPoollndex value associated with the SRS resource set used for the first PUSCH according to a configured or predefined association rule.

As one embodiment, the coresetPoolIndex value associated with the first PDCCH is configurable.

As one embodiment, the coresetPoolIndex value associated with the configured grant for the second PUSCH is: the coresetPoolIndex value associated with the PDCCH used for providing the configured grant for the second PUSCH.

As one embodiment, the coresetPoolIndex value associated with the configured grant for the second PUSCH is: the coresetPoolIndex value of the ControlResourceSet used for configuring resources occupied by the PDCCH used for providing the configured grant for the second PUSCH.

As one embodiment, the coresetPoolIndex value associated with the configured grant for the second PUSCH is: the coresetPoollndex value of the control resource set (CORESET) to which resources occupied by the PDCCH used for providing the configured grant for the second PUSCH belong.

As one embodiment, the coresetPoolIndex value associated with the configured grant for the second PUSCH is: the coresetPoolIndex value of the ControlResourceSet used for configuring the search for the DCI detected in the PDCCH used for providing the configured grant for the second PUSCH.

As one embodiment, the coresetPoolIndex value associated with the configured grant for the second PUSCH is: the coresetPoolIndex value associated with the second PUSCH.

As one embodiment, the coresetPoolIndex value associated with the configured grant for the second PUSCH is: the coresetPoolIndex value associated with the DCI used for activating the second PUSCH.

As one embodiment, the coresetPoolIndex value associated with the configured grant of the second PUSCH is: the coresetPoollndex value of the control resource set associated with the DCI used for activating the second PUSCH.

As one embodiment, the coresetPoollndex value associated with the configured grant for the second PUSCH is: the coresetPoolIndex value associated with the DCI detected in the PDCCH used for providing the configured grant for the second PUSCH.

As one embodiment, the coresetPoollndex value associated with the configured grant for the second PUSCH is: the coresetPoollndex value of the control resource set associated with the DCI detected in the PDCCH used for providing the configured grant for the second PUSCH.

As one embodiment, the coresetPoolIndex value associated with the configured grant for the second PUSCH is: the coresetPoolIndex value of the control resource set associated with the PDCCH used for providing the configured grant for the second PUSCH.

As one embodiment, the PDCCH used for providing the configured grant for the second PUSCH is: the PDCCH used for indicating activation of the configured grant for the second PUSCH.

As one embodiment, the coresetPoolIndex value associated with the configured grant for the second PUSCH is: the coresetPoolIndex value associated with the SRS resource set used for sending the second PUSCH.

As one embodiment, the coresetPoolIndex value associated with the configured grant for the second PUSCH is: the coresetPoolIndex value associated with the SRS resource set used for sending the second PUSCH according to the configured or predefined association rule.

As one embodiment, the coresetPoolIndex value associated with the configured grant of the second PUSCH is: the coresetPoolIndex value of the control resource set associated with the DCI used for activating the second PUSCH.

As one embodiment, the coresetPoolIndex value associated with the configured grant for the second PUSCH is: the coresetPoolIndex value of the ControlResourceSet used for configuring the search for target DCI; and the target DCI is the DCI used for activating the configured grant for the second PUSCH.

As one embodiment, the coresetPoolIndex value associated with the configured grant for the second PUSCH is configurable.

As one embodiment, the coresetPoolIndex is a parameter indicating an index of a CORESET (Control resource set) pool.

As one embodiment, the coresetPoollndex is an RRC layer parameter.

As one embodiment, one coresetPoolIndex value is a value of the coresetPoolIndex.

As one embodiment, one coresetPoolIndex value is the index of the CORESET pool.

As one embodiment, one coresetPoolIndex value is one of 0 or 1.

As one embodiment, the first HARQ entity is one HARQ (Hybrid automatic repeat request) entity.

As one embodiment, the first HARQ entity is comprised in one MAC entity.

As one embodiment, the first HARQ entity is for one serving cell with an uplink configuration.

As one embodiment, the first HARQ entity maintains a plurality of parallel HARQ processes.

As one embodiment, the first HARQ entity maintains a plurality of parallel UL HARQ processes.

As one embodiment, the first HARQ entity is for the first node.

As one embodiment, the meaning of an expression "delivered to (the) first HARQ entity" is: delivered to the first HARQ entity by the MAC entity.

As one embodiment, when the configured grant for the second PUSCH is not delivered to the first HARQ entity, the first node does not send the second PUSCH.

As one embodiment, the meaning of an expression "the configured grant for the second PUSCH is not delivered to the first HARQ entity" is: the following operation is not executed: the configured grant for the second PUSCH is delivered to the first HARQ entity.

As one embodiment, the meaning of the expression "the configured grant for the second PUSCH is not delivered to the first HARQ entity" is: the following operation is skipped: the configured grant for the second PUSCH is delivered to the first HARQ entity.

As one embodiment, the meaning of the expression "the configured grant for the second PUSCH is not delivered to the first HARQ entity" comprises: the first node does not send the second PUSCH.

### Embodiment 2

Embodiment 2 illustrates a schematic diagram of one network architecture according to the present application, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise one piece or more pieces of UE (User Equipment) 201, an NG-RAN (Next Generation-Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, however, those skilled in the art will readily appreciate that the various concepts presented throughout the present application may be extended to networks providing circuit switching services or other cellular networks. The NG-RAN comprises an NR node B (gNB) 203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmit/Receive Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Date Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocal) packets are transmitted through the S-GW212, and the S-GW212 is itself connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application.

As one embodiment, the UE201 corresponds to a second node in the present application.

As one embodiment, the UE201 is a piece of UE.

As one embodiment, the gNB203 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device supporting a large-latency difference.

As one embodiment, the gNB203 is one flying platform device.

As one embodiment, the gNB203 is a satellite device.

### Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 between a first communication node device (UE, a gNB or an RSU in V2X) and a second communication node device (the gNB, UE or RSU in V2X) or between two pieces of UE: an Layer 1, an Layer 2 and an Layer 3. The Layer 1 (L1 layer) is the lowest layer and implements various PHY (physical layer) signal processing functions. The L1 layer will be referred to herein as a PHY301. The Layer 2 (L2 layer) 305 is above the PHY301 and is responsible for a link between the first communication node device and the second communication node device, as well as between two pieces of UE, through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper-layer data packets, a retransmission of lost data packets, and reordering of data packets to compensate for disordered reception caused by an HARQ. The MAC sublayer 302 provides multiplexing between logical channels and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS streams and data radio bearers (DRBs) to support the diversity of services. Although not shown in the figure, the first communication node device may have several upper layers above the L2 layer 355, comprising a network layer (e.g., an IP layer) terminating at the P-GW on the network side and an application layer terminating at the other end of a connection (e.g., remote UE and a server).

As one embodiment, the radio protocol architecture in FIG. 3 is applicable to a first node in the present application.

As one embodiment, the radio protocol architecture in FIG. 3 is applicable to a second node in the present application.

As one embodiment, a first PDCCH in the present application is generated at the PHY301.

As one embodiment, a first PUSCH in the present application is generated at a PHY351.

As one embodiment, a second PUSCH in the present application is generated at the PHY351.

### Embodiment 4

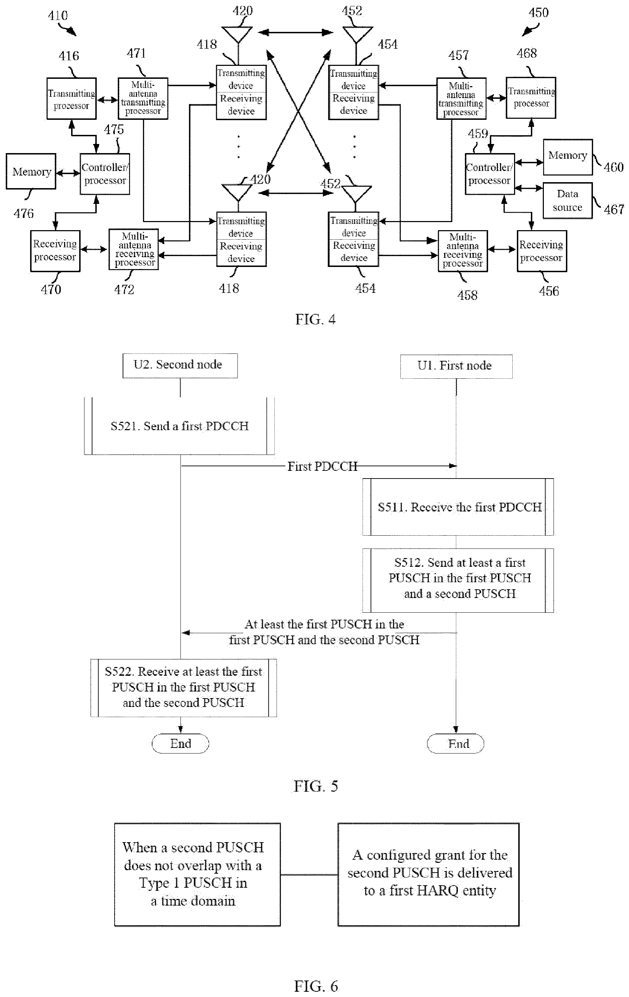

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper-layer data packets from a core network are provided to the controller/processor 475. The controller/processor 475 implements the functionality of an L2 layer. In the transmission from the first communication device 410 to the second communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for a retransmission of lost packets and signalings to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the encoded and modulated symbols to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In a frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the second communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In a transmission from the second communication device 450 to the first communication device 410, at the second communication device 450, the data source 467 is used for providing the upper-layer data packets to the controller/processor 459. The data source 467 represents all protocol layers above the L2 layer. Similar to the sending function at the first communication device 410 described in the transmission from the first communication device 410 to the second communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for the retransmission of lost packets and signalings to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the function at the first communication device 410 is similar to a reception function at the second communication device 450 described in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, a first node in the present application comprises the second communication device 450, and a second node in the present application comprises the first communication device 410.

As one sub-embodiment of the above embodiment, the first node is a piece of user equipment, and the second node is a piece of user equipment.

As one sub-embodiment of the above embodiment, the first node is a piece of user equipment, and the second node is a relay node.

As one sub-embodiment of the above embodiment, the first node is a relay node, and the second node is a piece of user equipment.

As one sub-embodiment of the above embodiment, the first node is a piece of user equipment, and the second node is a base station device.

As one sub-embodiment of the above embodiment, the first node is a relay node, and the second node is a base station device.

As one sub-embodiment of the above embodiment, the second node is a piece of user equipment, and the first node is a base station device.

As one sub-embodiment of the above embodiment, the second node is a relay node, and the first node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for performing error detection using acknowledge (ACK) and/or negative acknowledge (NACK) protocols to support HARQ operations.

As one embodiment, the second communication device 450 comprises: at least one processor and at least one memory, and the at least one memory comprises computer program codes; and the at least one memory and the computer program codes are configured to be used together with the at least one processor. The second communication device 450 apparatus at least: receives a first PDCCH; and sends at least a first PUSCH in the first PUSCH and a second PUSCH, the first PDCCH being used for scheduling the first PUSCH, and the second PUSCH being a PUSCH of a configured grant, wherein whether the configured grant for the second PUSCH is delivered to a first HARQ entity is related to both whether the configured grant for the second PUSCH and the first PDCCH are associated with different coresetPoollndex values, and whether the second PUSCH overlaps with the first PUSCH in a time domain.

As one sub-embodiment of the above embodiment, the second communication device 450 corresponds to the first node in the present application.

As one embodiment, the second communication device 450 comprises: a memory storing a computer-readable instruction program that generates an action when executed by at least one processor, the action comprising: receiving the first PDCCH; and sending at least the first PUSCH in the first PUSCH and the second PUSCH, the first PDCCH being used for scheduling the first PUSCH, and the second PUSCH being the PUSCH of the configured grant, wherein whether the configured grant for the second PUSCH is delivered to the first HARQ entity is related to both whether the configured grant for the second PUSCH and the first PDCCH are associated with different coresetPoollndex values, and whether the second PUSCH overlaps with the first PUSCH in the time domain.

As one sub-embodiment of the above embodiment, the second communication device 450 corresponds to the first node in the present application.

As one embodiment, the first communication device 410 comprises: at least one processor and at least one memory, and the at least one memory comprises computer program codes; and the at least one memory and the computer program codes are configured to be used together with the at least one processor. The first communication device 410 apparatus at least: sends the first PDCCH; and receives at least the first PUSCH in the first PUSCH and the second PUSCH, the first PDCCH being used for scheduling the first PUSCH, and the second PUSCH being the PUSCH of the configured grant, wherein whether the configured grant for the second PUSCH is delivered to the first HARQ entity is related to both whether the configured grant for the second PUSCH and the first PDCCH are associated with different coresetPoolIndex values, and whether the second PUSCH overlaps with the first PUSCH in the time domain.

As one sub-embodiment of the above embodiment, the first communication device 410 corresponds to the second node in the present application.

As one embodiment, the first communication device 410 comprises: a memory storing a computer-readable instruction program that generates an action when executed by at least one processor, the action comprising: sending the first PDCCH; and receiving at least the first PUSCH in the first PUSCH and the second PUSCH, the first PDCCH being used for scheduling the first PUSCH, and the second PUSCH being the PUSCH of the configured grant, wherein whether the configured grant for the second PUSCH is delivered to the first HARQ entity is related to both whether the configured grant for the second PUSCH and the first PDCCH are associated with different coresetPoolIndex values, and whether the second PUSCH overlaps with the first PUSCH in the time domain.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first PDCCH in the present application.

As one embodiment, at least one of {the antenna 420, the transmitting device 418, the multi-antenna transmitting processor 471, the transmitting processor 416, the controller/processor 475, and the memory 476} is used for sending the first PDCCH.

As one embodiment, at least one of {the antenna 452, the transmitting device 454, the multi-antenna transmitting processor 458, the transmitting processor 468, the controller/processor 459, the memory 460, and the data source 467} is used for sending the first PUSCH in the present application.

As one embodiment, at least one of {the antenna 420, the receiving device 418, the multi-antenna receiving processor 472, the receiving processor 470, the controller/processor 475, and the memory 476} is used for receiving the first PUSCH in the present application.

As one embodiment, at least one of {the antenna 452, the transmitting device 454, the multi-antenna transmitting processor 458, the transmitting processor 468, the controller/processor 459, the memory 460, and the data source 467} is used for sending the second PUSCH in the present application.

As one embodiment, at least one of {the antenna 420, the receiving device 418, the multi-antenna receiving processor 472, the receiving processor 470, the controller/processor 475, and the memory 476} is used for receiving the second PUSCH in the present application.

As one embodiment, the second communication device 450 comprises: at least one processor and at least one memory, and the at least one memory comprises computer program codes; and the at least one memory and the computer program codes are configured to be used together with the at least one processor. The second communication device 450 apparatus at least: receives the first PDCCH; and sends at least the first PUSCH in the first PUSCH and the second PUSCH, the first PDCCH being used for scheduling the first PUSCH, and the second PUSCH being the PUSCH of the configured grant, wherein whether the configured grant for the second PUSCH is ignored by the first HARQ entity is related to both whether the configured grant for the second PUSCH and the first PDCCH are associated with different coresetPoolIndex values, and whether the second PUSCH overlaps with the first PUSCH in the time domain.

As one sub-embodiment of the above embodiment, the second communication device 450 corresponds to the first node in the present application.

As one embodiment, the second communication device 450 comprises: a memory storing a computer-readable instruction program that generates an action when executed by at least one processor, the action comprising: receiving the first PDCCH; and sending at least the first PUSCH in the first PUSCH and the second PUSCH, the first PDCCH being used for scheduling the first PUSCH, and the second PUSCH being the PUSCH of the configured grant, wherein whether the configured grant for the second PUSCH is ignored by the first HARQ entity is related to both whether the configured grant for the second PUSCH and the first PDCCH are associated with different coresetPoolIndex values, and whether the second PUSCH overlaps with the first PUSCH in the time domain.

As one sub-embodiment of the above embodiment, the second communication device 450 corresponds to the first node in the present application.

As one embodiment, the first communication device 410 comprises: at least one processor and at least one memory, and the at least one memory comprises computer program codes; and the at least one memory and the computer program codes are configured to be used together with the at least one processor. The first communication device 410 apparatus at least: sends the first PDCCH; and receives at least the first PUSCH in the first PUSCH and the second PUSCH, the first PDCCH being used for scheduling the first PUSCH, and the second PUSCH being the PUSCH of the configured grant, wherein whether the configured grant for the second PUSCH is ignored by the first HARQ entity is related to both whether the configured grant for the second PUSCH and the first PDCCH are associated with different coresetPoolIndex values, and whether the second PUSCH overlaps with the first PUSCH in the time domain.

As one sub-embodiment of the above embodiment, the first communication device 410 corresponds to the second node in the present application.

As one embodiment, the first communication device 410 comprises: a memory storing a computer-readable instruction program that generates an action when executed by at least one processor, the action comprising: sending the first PDCCH; and receiving at least the first PUSCH in the first PUSCH and the second PUSCH, the first PDCCH being used for scheduling the first PUSCH, and the second PUSCH being the PUSCH of the configured grant, wherein whether the configured grant for the second PUSCH is ignored by the first HARQ entity is related to both whether the configured grant for the second PUSCH and the first PDCCH are associated with different coresetPoolIndex values, and whether the second PUSCH overlaps with the first PUSCH in the time domain.

As one sub-embodiment of the above embodiment, the first communication device 410 corresponds to the second node in the present application.

### Embodiment 5

Embodiment 5 illustrates a flowchart of a signal transmission according to one embodiment of the present application, as shown in FIG. 5. In FIG. 5, a first node U1 and a second node U2 are communicated via an air interface.

The first node U1 receives a first PDCCH in step S511; and sends at least a first PUSCH in the first PUSCH and a second PUSCH in step S512.

For the second node U2, in step S521, the first PDCCH is sent; and in step S522, at least the first PUSCH of the first PUSCH and the second PUSCH is received.

In Embodiment 5, the first PDCCH is used for scheduling the first PUSCH, and the second PUSCH is a PUSCH of a configured grant; whether the configured grant for the second PUSCH is delivered to a first HARQ entity is related to both whether the configured grant for the second PUSCH and the first PDCCH are associated with different coresetPoollndex values, and whether the second PUSCH overlaps with the first PUSCH in a time domain; when the second PUSCH does not overlap with a Type 1 PUSCH in the time domain, the configured grant for the second PUSCH is delivered to the first HARQ entity; whether the first PUSCH is the Type 1 PUSCH is related to whether the configured grant for the second PUSCH and the first PDCCH are associated with different coresetPoolIndex values; and when the configured grant for the second PUSCH and the first PDCCH are associated with different coresetPoolIndex values, the first PUSCH is not the Type 1 PUSCH.

As one sub-embodiment of Embodiment 5, when the configured grant for the second PUSCH and the first PDCCH are not associated with different coresetPoolIndex values, the first PUSCH is the Type 1 PUSCH.

As one sub-embodiment of Embodiment 5, when the second PUSCH overlaps with the Type 1 PUSCH in the time domain, the configured grant for the second PUSCH is not delivered to the first HARQ entity.

As one sub-embodiment of Embodiment 5, when the second PUSCH does not overlap with the Type 1 PUSCH in the time domain: the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; based on the configured grant for the second PUSCH, the HARQ process indicates a physical layer to generate a transmission of the second PUSCH; and the first node U1 sends the second PUSCH.

As one embodiment, the first node U1 is a first node in the present application.

As one embodiment, the second node U2 is a second node in the present application.

As one embodiment, the first node U1 is one piece of UE.

As one embodiment, the first node U1 is one base station.

As one embodiment, the second node U2 is one base station.

As one embodiment, the second node U2 is one piece of UE.

As one embodiment, the air interface between the second node U2 and the first node U1 is a Uu interface.

As one embodiment, the air interface between the second node U2 and the first node U1 comprises a cellular link.

As one embodiment, the air interface between the second node U2 and the first node U1 comprises a radio interface between a base station device and user equipment.

As one embodiment, the air interface between the second node U2 and the first node U1 comprises a radio interface between a satellite device and user equipment.

As one embodiment, the air interface between the second node U2 and the first node U1 comprises a radio interface between user equipment and user equipment.

As one embodiment, the problem to be solved by the present application comprises: how to enhance configured grants.

As one embodiment, the problem to be solved by the present application comprises: how to improve uplink transmission performance.

As one embodiment, the problem to be solved by the present application comprises: how to improve processing efficiency of the PUSCH.

As one embodiment, the problem to be solved by the present application comprises: how to save storage overhead.

As one embodiment, the problem to be solved by the present application comprises: how to avoid some situations where a delivery of configured grants is improperly abandoned.

As one embodiment, the problem to be solved by the present application comprises: how to optimize system design to support different pieces of user equipment.

As one embodiment, the problem to be solved by the present application comprises: how to ensure good compatibility.

As one embodiment, the problem to be solved by the present application comprises: what is a relationship between whether the configured grant is delivered to an HARQ entity and a PUSCH scheduled by a PDCCH, under the influence of the coresetPoolIndex value.

As one embodiment, the problem to be solved by the present application comprises: what is the relationship between the configured grant for the second PUSCH and the first PUSCH.

As one embodiment, the first node U1 sends or does not send the second PUSCH.

### Embodiment 6

Embodiment 6 illustrates a schematic diagram explaining that a configured grant for a second PUSCH is delivered to a first HARQ entity according to one embodiment of the present application, as shown in FIG. 6.

In Embodiment 6, when the second PUSCH does not overlap with a Type 1 PUSCH in a time domain, the configured grant for the second PUSCH is delivered to the first HARQ entity; and whether the first PUSCH is the Type 1 PUSCH is related to whether the configured grant for the second PUSCH and a first PDCCH are associated with different coresetPoolIndex values.

As one embodiment, the configured grant for the second PUSCH is delivered to the first HARQ entity, and corresponding HARQ information is also delivered to the first HARQ entity.

As one embodiment, an expression "the configured grant for the second PUSCH is delivered to the first HARQ entity" comprises: a first node sends the second PUSCH.

As one embodiment, the configured grant for the second PUSCH is delivered to the first HARQ entity; the first HARQ entity delivers the configured grant for the second PUSCH to a corresponding HARQ process and indicates the HARQ process to trigger one new transmission; and based on the configured grant for the second PUSCH, the HARQ process indicates a physical layer to generate one transmission.

As one embodiment, the configured grant for the second PUSCH is delivered to the first HARQ entity; the first HARQ entity obtains an MAC (Medium Access Control) PDU (Protocol Data Unit) to be sent from a multiplexing and assembly entity, delivers the MAC PDU and the configured grant for the second PUSCH as well as the HARQ information of a transport block to the corresponding HARQ process, and indicates the HARQ process to trigger one new transmission; and based on the configured grant for the second PUSCH, the HARQ process indicates the physical layer to generate one transmission.

As one embodiment, the configured grant for the second PUSCH is delivered to the first HARQ entity; the first HARQ entity delivers the configured grant for the second PUSCH to the corresponding HARQ process and indicates the HARQ process to trigger one retransmission; and based on the configured grant for the second PUSCH, the HARQ process indicates the physical layer to generate one transmission.

As one embodiment, the configured grant for the second PUSCH is delivered to the first HARQ entity; the first HARQ entity obtains the MAC (Medium Access Control) PDU (Protocol Data Unit) to be sent from the multiplexing and assembly entity, delivers the MAC PDU and the configured grant for the second PUSCH as well as the HARQ information of the transport block to the corresponding HARQ process, and indicates the HARQ process to trigger one retransmission; and based on the configured grant for the second PUSCH, the HARQ process indicates the physical layer to generate one transmission.

As one embodiment, the configured grant for the second PUSCH is delivered to the first HARQ entity, and the first node sends the second PUSCH.

As one embodiment, the second PUSCH is for one new transmission.

As one embodiment, the second PUSCH is for one retransmission.

As one embodiment, for the HARQ process corresponding to the second PUSCH, a configuredGrantTimer is not running.

As one embodiment, for the HARQ process corresponding to the second PUSCH, a cg-RetransmissionTimer is not configured.

As one embodiment, for the HARQ process corresponding to the second PUSCH, the cg-RetransmissionTimer is configured but not running.

As one embodiment, for the HARQ process corresponding to the second PUSCH, a cg-SDT-RetransmissionTimer is not configured.

As one embodiment, no CG-SDT (Configured Grant-based SDT (Small Data Transmission)) procedure is in progress.

As one embodiment, *lch-basedPrioritization* is not configured for an MAC entity.

As one embodiment, *lch-basedPrioritization* is configured for the MAC entity.

As one embodiment, the second PUSCH does not overlap with a PUSCH of an uplink grant received in a random access response in the time domain.

As one embodiment, the second PUSCH does not overlap with a PUSCH of an MSGA payload in the time domain.

As one embodiment, the second PUSCH does not overlap with the PUSCH of the uplink grant addressed to a temporary C-RNTI in the time domain.

### Embodiment 7

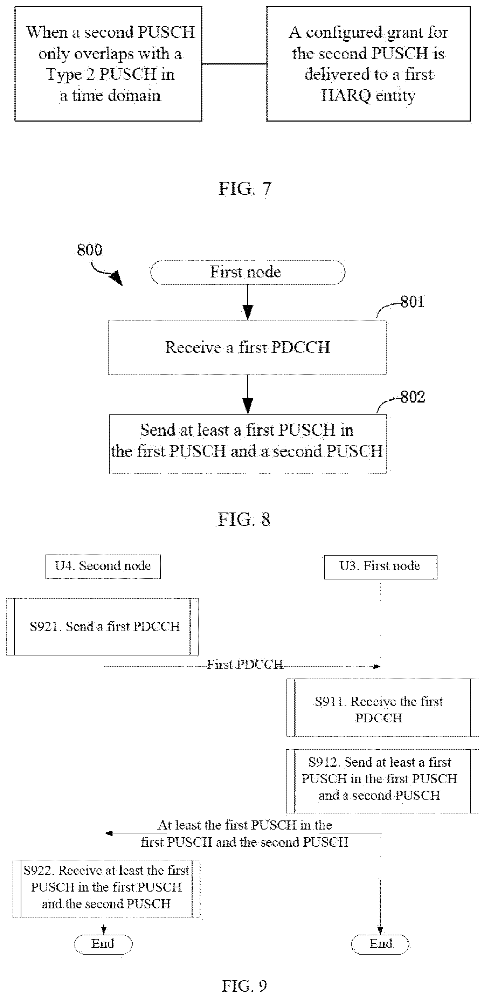

Embodiment 7 illustrates a schematic diagram explaining that a configured grant for a second PUSCH is delivered to a first HARQ entity according to one embodiment of the present application, as shown in FIG. 7.

In Embodiment 7, when the second PUSCH overlaps only with a Type 2 PUSCH in a time domain, the configured grant for the second PUSCH is delivered to the first HARQ entity; and whether a first PUSCH is the Type 2 PUSCH is related to whether the configured grant for the second PUSCH and a first PDCCH are associated with different coresetPoolIndex values.

As one embodiment, when the configured grant for the second PUSCH and the first PDCCH are associated with different coresetPoolIndex values, the first PUSCH is the Type 2 PUSCH.

As one embodiment, when the first PUSCH is the Type 2 PUSCH, the configured grant for the second PUSCH and the first PDCCH are associated with different coresetPoolIndex values.

As one embodiment, when the first PUSCH is a Type 1 PUSCH, the first PUSCH is not the Type 2 PUSCH.

As one embodiment, when the first PUSCH is not the Type 1 PUSCH, the first PUSCH is the Type 2 PUSCH.

As one embodiment, when the first PUSCH is the Type 2 PUSCH, the first PUSCH is not the Type 1 PUSCH.

### Embodiment 8

Embodiment 8 illustrates a processing flowchart of a first node according to one embodiment of the present application, as shown in FIG. 8.

In Embodiment 8, the first node in the present application receives a first PDCCH in step 801; and sends at least a first PUSCH in the first PUSCH and a second PUSCH in step 802.

In Embodiment 8, the first PDCCH is used for scheduling the first PUSCH, and the second PUSCH is a PUSCH of a configured grant; and whether the configured grant for the second PUSCH is ignored by a first HARQ entity is related to both whether the configured grant for the second PUSCH and the first PDCCH are associated with different coresetPoolIndex values, and whether the second PUSCH overlaps with the first PUSCH in a time domain.

As one embodiment, the meaning of an expression "whether the configured grant for the second PUSCH is ignored by a first HARQ entity is related to both whether the configured grant for the second PUSCH and the first PDCCH are associated with different coresetPoolIndex values, and whether the second PUSCH overlaps with the first PUSCH in a time domain" is: whether the configured grant for the second PUSCH is ignored by the first HARQ entity is related to whether both of the second PUSCH and a Type 1 PUSCH overlap in the time domain, whether the first PUSCH is the Type 1 PUSCH is related to whether the configured grant for the second PUSCH and the first PDCCH are associated with different coresetPoolIndex values.

As one embodiment, if the second PUSCH overlaps with the Type 1 PUSCH in the time domain, the configured grant for the second PUSCH is ignored by the first HARQ entity; otherwise, the configured grant for the second PUSCH is not ignored by the first HARQ entity; and whether the first PUSCH is the Type 1 PUSCH is related to whether the configured grant for the second PUSCH and the first PDCCH are associated with different coresetPoolIndex values.

As one embodiment, if the second PUSCH overlaps with the Type 1 PUSCH in the time domain, the configured grant for the second PUSCH is not ignored by the first HARQ entity; otherwise, the configured grant for the second PUSCH is ignored by the first HARQ entity; and whether the first PUSCH is the Type 1 PUSCH is related to whether the configured grant for the second PUSCH and the first PDCCH are associated with different coresetPoolIndex values.

As one embodiment, the meaning of an expression "whether the configured grant for the second PUSCH is ignored by a first HARQ entity" is: whether the first HARQ entity delivers the configured grant for the second PUSCH to a corresponding HARQ process.

As one embodiment, the meaning of the expression "whether the configured grant for the second PUSCH is ignored by a first HARQ entity" is: whether the first HARQ entity delivers the configured grant for the second PUSCH as well as HARQ information of a transport block to the corresponding HARQ process.

As one embodiment, when the configured grant for the second PUSCH is ignored by the first HARQ entity, the first HARQ entity does not deliver the configured grant for the second PUSCH to the corresponding HARQ process.

As one embodiment, when the configured grant for the second PUSCH is ignored by the first HARQ entity, the first HARQ entity abandons delivering the configured grant for the second PUSCH as well as the HARQ information of the transport block to the corresponding HARQ process.

As one embodiment, when the configured grant for the second PUSCH is ignored by the first HARQ entity, the first node does not generate the second PUSCH.

As one embodiment, the meaning of "the configured grant for the second PUSCH is not ignored by the first HARQ entity" is: the first HARQ entity delivers the configured grant for the second PUSCH to the corresponding HARQ process.

As one embodiment, the meaning of "the configured grant for the second PUSCH is not ignored by the first HARQ entity" is: the first HARQ entity delivers the configured grant for the second PUSCH as well as the HARQ information of the transport block to the corresponding HARQ process.

As one embodiment, when the configured grant for the second PUSCH is not ignored by the first HARQ entity, the first HARQ entity delivers the configured grant for the second PUSCH as well as the HARQ information of the transport block to the corresponding HARQ process.

As one embodiment, the first HARQ entity delivers the configured grant for the second PUSCH as well as the HARQ information of the transport block to the corresponding HARQ process, and indicates the HARQ process to trigger one new transmission; and based on the configured grant for the second PUSCH, the HARQ process indicates a physical layer to generate one transmission.

As one embodiment, the first HARQ entity delivers the configured grant for the second PUSCH as well as the HARQ information of the transport block to the corresponding HARQ process, and indicates the HARQ process to trigger one retransmission; and based on the configured grant for the second PUSCH, the HARQ process indicates the physical layer to generate one transmission.

As one embodiment, the configured grant for the second PUSCH is delivered to the first HARQ entity.

As one embodiment, the first node sends the second PUSCH, wherein the first HARQ entity delivers the configured grant for the second PUSCH as well as the HARQ information of the transport block to the corresponding HARQ process, and indicates the HARQ process to trigger one new transmission; and based on the configured grant for the second PUSCH, the HARQ process indicates the physical layer to generate a transmission of the second PUSCH.

As one embodiment, the first node sends the second PUSCH, wherein the first HARQ entity delivers the configured grant for the second PUSCH as well as the HARQ information of the transport block to the corresponding HARQ process, and indicates the HARQ process to trigger one retransmission; and based on the configured grant for the second PUSCH, the HARQ process indicates the physical layer to generate the transmission of the second PUSCH.

### Embodiment 9

Embodiment 9 illustrates a flowchart of a signal transmission according to one embodiment of the present application, as shown in FIG. 9. In FIG. 9, a first node U3 and a second node U4 are communicated via an air interface.

The first node U3 receives a first PDCCH in step S911; and sends at least a first PUSCH in the first PUSCH and a second PUSCH in step S912.

The second node U4 sends the first PDCCH in step S921; and receives at least the first PUSCH in the first PUSCH and the second PUSCH in step S922.

In Embodiment 9, the first PDCCH is used for scheduling the first PUSCH, and the second PUSCH is a PUSCH of a configured grant; whether the configured grant for the second PUSCH is ignored by a first HARQ entity is related to both whether the configured grant for the second PUSCH and the first PDCCH are associated with different coresetPoollndex values, and whether the second PUSCH overlaps with the first PUSCH in a time domain; when the second PUSCH overlaps with a Type 1 PUSCH in the time domain, the configured grant for the second PUSCH is ignored by the first HARQ entity; whether the first PUSCH is the Type 1 PUSCH is related to whether the configured grant for the second PUSCH and the first PDCCH are associated with different coresetPoolIndex values; when the configured grant for the second PUSCH and the first PDCCH are associated with different coresetPoolIndex values, the first PUSCH is not the Type 1 PUSCH; and the configured grant for the second PUSCH is delivered to the first HARQ entity.

As one sub-embodiment of Embodiment 9, when the second PUSCH does not overlap with the Type 1 PUSCH in the time domain, the configured grant for the second PUSCH is not ignored by the first HARQ entity.

As one sub-embodiment of Embodiment 9, when the configured grant for the second PUSCH and the first PDCCH are not associated with different coresetPoolIndex values, the first PUSCH is the Type 1 PUSCH.

As one sub-embodiment of Embodiment 9, the first HARQ entity delivers the configured grant for the second PUSCH as well as HARQ information of a transport block to a corresponding HARQ process, and indicates the HARQ process to trigger one new transmission; based on the configured grant for the second PUSCH, the HARQ process indicates a physical layer to generate a transmission of the second PUSCH; and the first node U3 sends the second PUSCH.

As one sub-embodiment of Embodiment 9, the first HARQ entity delivers the configured grant for the second PUSCH as well as the HARQ information of the transport block to the corresponding HARQ process, and indicates the HARQ process to trigger one retransmission; based on the configured grant for the second PUSCH, the HARQ process indicates the physical layer to generate the transmission of the second PUSCH; and the first node U3 sends the second PUSCH.

As one embodiment, the first node U3 is a first node in the present application.

As one embodiment, the second node U4 is a second node in the present application.

As one embodiment, the first node U3 is one piece of UE.

As one embodiment, the first node U3 is one base station.

As one embodiment, the second node U4 is one base station.

As one embodiment, the second node U4 is one piece of UE.

As one embodiment, the air interface between the second node U4 and the first node U3 is a Uu interface.

As one embodiment, the air interface between the second node U4 and the first node U3 comprises a cellular link.

As one embodiment, the air interface between the second node U4 and the first node U3 comprises a radio interface between a base station device and user equipment.

As one embodiment, the air interface between the second node U4 and the first node U3 comprises a wireless interface between a satellite device and user equipment.

As one embodiment, the air interface between the second node U4 and the first node U3 comprises a radio interface between user equipment and user equipment.

As one embodiment, the problem to be solved by the present application comprises: how to enhance configured grants.

As one embodiment, the problem to be solved by the present application comprises: how to improve uplink transmission performance.

As one embodiment, the problem to be solved by the present application comprises: how to improve the flexibility of processing.

As one embodiment, the problem to be solved by the present application comprises: how to avoid some situations where configured grants are improperly ignored.

As one embodiment, the problem to be solved by the present application comprises: how to optimize system design to support different pieces of user equipment.

As one embodiment, the problem to be solved by the present application comprises: how to ensure good compatibility.

As one embodiment, the problem to be solved by the present application comprises: what is a relationship between whether the configured grant is ignored by an HARQ entity and a PUSCH scheduled by a PDCCH under the influence of the coresetPoolIndex value.

As one embodiment, the problem to be solved by the present application comprises: what is the relationship between the configured grant for the second PUSCH and the first PUSCH.

As one embodiment, the first node U3 sends or does not send the second PUSCH.

### Embodiment 10

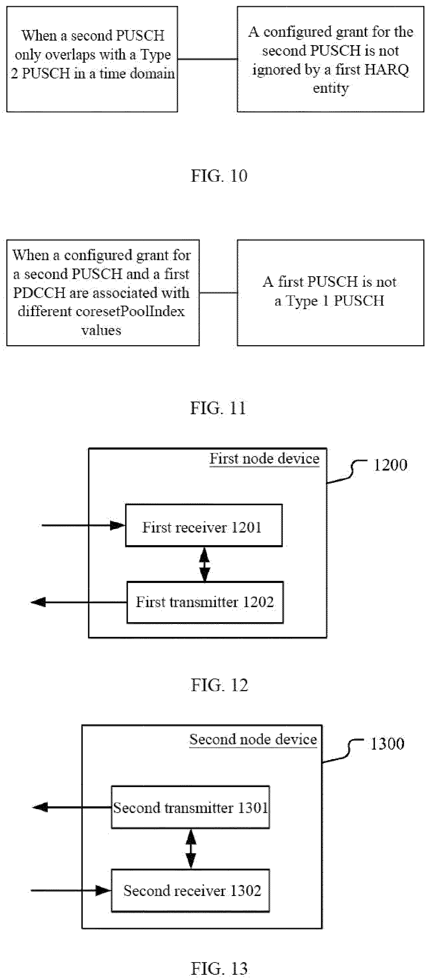

Embodiment 10 illustrates a schematic diagram explaining that a configured grant for a second PUSCH is not ignored by a first HARQ entity according to one embodiment of the present application, as shown in FIG. 10.

In Embodiment 10, when the second PUSCH only overlaps with a Type 2 PUSCH in a time domain, the configured grant for the second PUSCH is not ignored by the first HARQ entity; whether a first PUSCH is the Type 2 PUSCH is related to whether the configured grant for the second PUSCH and a first PDCCH are associated with different coresetPoolIndex values.

As one embodiment, when the configured grant for the second PUSCH and the first PDCCH are associated with different coresetPoolIndex values, the first PUSCH is the Type 2 PUSCH.

As one embodiment, when the first PUSCH is a Type 1 PUSCH, the first PUSCH is not the Type 2 PUSCH.

As one embodiment, when the first PUSCH is not the Type 1 PUSCH, the first PUSCH is the Type 2 PUSCH.

As one embodiment, when the first PUSCH is the Type 2 PUSCH, the first PUSCH is not the Type 1 PUSCH.

### Embodiment 11

Embodiment 11 illustrates a schematic diagram explaining a relationship between a first PUSCH and a Type 1 PUSCH according to one embodiment of the present application, as shown in FIG. 11.

In Embodiment 11, when a configured grant for a second PUSCH and a first PDCCH are associated with different coresetPoolIndex values, the first PUSCH is not the Type 1 PUSCH.

As one embodiment, the Type 1 PUSCH is for one serving cell.

As one embodiment, any of the Type 1 PUSCHs is a PUSCH on a serving cell of the configured grant for the second PUSCH.

As one embodiment, the configured grant for the second PUSCH is for one serving cell, and the first PUSCH is on the one serving cell.

As one embodiment, the configured grant for the second PUSCH is for one serving cell, and any of the Type 1 PUSCHs is the PUSCH on the one serving cell.

As one embodiment, the configured grant for the second PUSCH is for one serving cell, and a serving cell where one of the Type 1 PUSCHs is located is the same as or different from the one serving cell.

As one embodiment, the configured grant for the second PUSCH is for one serving cell, and the serving cell where the first PUSCH is located is the same as or different from the one serving cell.

As one embodiment, the configured grant for the second PUSCH is for one serving cell, and the second PUSCH is configured on the one serving cell.

As one embodiment, if the configured grant for the second PUSCH and the first PDCCH are associated with different coresetPoollndex values, then the first PUSCH is not the Type 1 PUSCH; otherwise, the first PUSCH is the Type 1 PUSCH.

As one embodiment, the Type 1 PUSCH comprises a PUSCH of an uplink grant received in a random access response.

As one embodiment, the Type 1 PUSCH comprises the PUSCH of an MSGA payload.

As one embodiment, the Type 1 PUSCH comprises the PUSCH of the uplink grant addressed to a C-RNTI (Cell Radio Network Temporary Identifier).

As one embodiment, if the configured grant for the second PUSCH and the first PDCCH are associated with different coresetPoollndex values, then the first PUSCH is the Type 1 PUSCH; otherwise, the first PUSCH is not the Type 1 PUSCH.

### Embodiment 12

Embodiment 12 illustrates a structural block diagram of a processing apparatus in one first node device, as shown in FIG. 12. In FIG. 12, a processing apparatus 1200 in the first node device comprises a first receiver 1201 and a first transmitter 1202.

As one embodiment, a first node device 1200 is a base station.

As one embodiment, the first node device 1200 is a piece of user equipment.

As one embodiment, the first node device 1200 is a relay node.

As one embodiment, the first node device 1200 is a vehicular communication device.

As one embodiment, the first node device 1200 is a piece of single-panel user equipment.

As one embodiment, the first node device 1200 is a piece of multi-panel user equipment.

As one embodiment, the first receiver 1201 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1201 comprises at least the first five of the antenna 452, the receiving device 454, the multi-antenna receiving processor 458, the receiving processor 456, the controller/processor 459, the memory 460, and the data source 467 in FIG. 4 of the present application.

As one embodiment, the first receiver 1201 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver 1201 comprises at least the first three of the antenna 452, the receiving device 454, the multi-antenna receiving processor 458, the receiving processor 456, the controller/processor 459, the memory 460, and the data source 467 in FIG. 4 of the present application.

As one embodiment, the first receiver 1201 comprises at least the first two of the antenna 452, the receiving device 454, the multi-antenna receiving processor 458, the receiving processor 456, the controller/processor 459, the memory 460, and the data source 467 in FIG. 4 of the present application.

As one embodiment, the first transmitter 1202 comprises at least one of the antenna 452, the transmitting device 454, a multi-antenna transmitting processor 457, a transmitting processor 468, the controller/processor 459, the memory 460, and the data source 467 in FIG. 4 of the present application.

As one embodiment, the first transmitter 1202 comprises at least the first five of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 1202 comprises at least the first four of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 1202 comprises at least the first three of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 1202 comprises at least the first two of the antenna 452, the transmitting device 454, the multi-antenna transmitting processor 457, the transmitting processor 468, the controller/processor 459, the memory 460, and the data source 467 in FIG. 4 of the present application.

As one embodiment, the first receiver 1201 receives a first PDCCH; and the first transmitter 1202 sends at least a first PUSCH in the first PUSCH and a second PUSCH, the first PDCCH being used for scheduling the first PUSCH, and the second PUSCH being a PUSCH of a configured grant, wherein whether the configured grant for the second PUSCH is delivered to a first HARQ entity is related to both whether the configured grant for the second PUSCH and the first PDCCH are associated with different coresetPoollndex values, and whether the second PUSCH overlaps with the first PUSCH in a time domain.

As one embodiment, whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

As one embodiment, when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

As one embodiment, the first transmitter 1202 sends the second PUSCH, wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

As one embodiment, when the configured grant for the second PUSCH and the first PDCCH are associated with different coresetPoolIndex values, the first PUSCH is not the Type 1 PUSCH.

As one embodiment, when the configured grant for the second PUSCH and the first PDCCH are not associated with different coresetPoollndex values, the first PUSCH is the Type 1 PUSCH.

As one embodiment, when the second PUSCH overlaps with the Type 1 PUSCH in the time domain, the configured grant for the second PUSCH is not delivered to the first HARQ entity.

As one embodiment, the first receiver 1201 receives the first PDCCH; and the first transmitter 1202 sends at least the first PUSCH in the first PUSCH and the second PUSCH, the first PDCCH being used for scheduling the first PUSCH, and the second PUSCH is the PUSCH of the configured grant, wherein whether the configured grant for the second PUSCH is ignored by the first HARQ entity is related to both whether the configured grant for the second PUSCH and the first PDCCH are associated with different coresetPoolIndex values, and whether the second PUSCH overlaps with the first PUSCH in the time domain.

As one embodiment, whether the configured grant for the second PUSCH is ignored by the first HARQ entity is related to whether both of the second PUSCH and the Type 1 PUSCH overlap in the time domain, and whether the first PUSCH is the Type 1 PUSCH is related to whether the configured grant for the second PUSCH and the first PDCCH are associated with different coresetPoollndex values.

As one embodiment, when the second PUSCH overlaps with the Type 1 PUSCH in the time domain, the configured grant for the second PUSCH is ignored by the first HARQ entity; and whether the first PUSCH is the Type 1 PUSCH is related to whether the configured grant for the second PUSCH and the first PDCCH are associated with different coresetPoolIndex values.

As one embodiment, when the configured grant for the second PUSCH and the first PDCCH are associated with different coresetPoolIndex values, the first PUSCH is not the Type 1 PUSCH.

As one embodiment, when the configured grant for the second PUSCH and the first PDCCH are not associated with different coresetPoollndex values, the first PUSCH is the Type 1 PUSCH.

As one embodiment, when the second PUSCH does not overlap with the Type 1 PUSCH in the time domain, the configured grant for the second PUSCH is not ignored by the first HARQ entity.

As one embodiment, the configured grant for the second PUSCH is delivered to the first HARQ entity.

### Embodiment 13

Embodiment 13 illustrates a structural block diagram of one processing apparatus in a second node device according to one embodiment, as shown in FIG. 13. In FIG. 13, a processing apparatus 1300 in the second node device comprises a second transmitter 1301 and a second receiver 1302.

As one embodiment, a second node device 1300 is a piece of user equipment.

As one embodiment, the second node device 1300 is a base station.

As one embodiment, the second node device 1300 is a satellite device.

As one embodiment, the second node device 1300 is a relay node.

As one embodiment, the second node device 1300 is a vehicular communication device.

As one embodiment, the second node device 1300 is one of a test apparatus, a test device, and a test instrument.

As one embodiment, the second transmitter 1301 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter 1301 comprises at least the first five of the antenna 420, the transmitting device 418, the multi-antenna transmitting processor 471, the transmitting processor 416, the controller/processor 475, and the memory 476 in FIG. 4 of the present application.

As one embodiment, the second transmitter 1301 comprises at least the first four of the antenna 420, the transmitting device 418, the multi-antenna transmitting processor 471, the transmitting processor 416, the controller/processor 475, and the memory 476 in FIG. 4 of the present application.

As one embodiment, the second transmitter 1301 comprises at least the first three of the antenna 420, the transmitting device 418, the multi-antenna transmitting processor 471, the transmitting processor 416, the controller/processor 475, and the memory 476 in FIG. 4 of the present application.

As one embodiment, the second transmitter 1301 comprises at least the first two of the antenna 420, the transmitting device 418, the multi-antenna transmitting processor 471, the transmitting processor 416, the controller/processor 475, and the memory 476 in FIG. 4 of the present application.

As one embodiment, the second receiver 1302 comprises at least one of the antenna 420, the receiving device 418, a multi-antenna receiving processor 472, a receiving processor 470, the controller/processor 475, and the memory 476 in FIG. 4 of the present application.

As one embodiment, the second receiver 1302 comprises at least the first five of the antenna 420, the receiving device 418, the multi-antenna receiving processor 472, the receiving processor 470, the controller/processor 475, and the memory 476 in FIG. 4 of the present application.

As one embodiment, the second receiver 1302 comprises at least the first four of the antenna 420, the receiving device 418, the multi-antenna receiving processor 472, the receiving processor 470, the controller/processor 475, and the memory 476 in FIG. 4 of the present application.

As one embodiment, the second receiver 1302 comprises at least the first three of the antenna 420, the receiving device 418, the multi-antenna receiving processor 472, the receiving processor 470, the controller/processor 475, and the memory 476 in FIG. 4 of the present application.

As one embodiment, the second receiver 1302 comprises at least the first two of the antenna 420, the receiving device 418, the multi-antenna receiving processor 472, the receiving processor 470, the controller/processor 475, and the memory 476 in FIG. 4 of the present application.

As one embodiment, the second transmitter 1301 sends a first PDCCH; and the second receiver 1302 receives at least a first PUSCH in the first PUSCH and a second PUSCH, the first PDCCH being used for scheduling the first PUSCH, and the second PUSCH being a PUSCH of a configured grant, wherein whether the configured grant for the second PUSCH is delivered to a first HARQ entity is related to both whether the configured grant for the second PUSCH and the first PDCCH are associated with different coresetPoollndex values, and whether the second PUSCH overlaps with the first PUSCH in a time domain.

As one embodiment, whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

As one embodiment, when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

As one embodiment, the second receiver 1302 receives the second PUSCH, wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

As one embodiment, when the configured grant for the second PUSCH and the first PDCCH are associated with different coresetPoolIndex values, the first PUSCH is not the Type 1 PUSCH.

As one embodiment, when the configured grant for the second PUSCH and the first PDCCH are not associated with different coresetPoollndex values, the first PUSCH is the Type 1 PUSCH.

As one embodiment, when the second PUSCH overlaps with the Type 1 PUSCH in the time domain, the configured grant for the second PUSCH is not delivered to the first HARQ entity.

As one embodiment, the second transmitter 1301 sends the first PDCCH; and the second receiver 1302 receives at least the first PUSCH in the first PUSCH and the second PUSCH, the first PDCCH being used for scheduling the first PUSCH, and the second PUSCH being the PUSCH of the configured grant, wherein whether the configured grant for the second PUSCH is ignored by the first HARQ entity is related to both whether the configured grant for the second PUSCH and the first PDCCH are associated with different coresetPoollndex values, and whether the second PUSCH overlaps with the first PUSCH in the time domain.

As one embodiment, whether the configured grant for the second PUSCH is ignored by the first HARQ entity is related to whether both of the second PUSCH and the Type 1 PUSCH overlap in the time domain, and whether the first PUSCH is the Type 1 PUSCH is related to whether the configured grant for the second PUSCH and the first PDCCH are associated with different coresetPoolIndex values.

As one embodiment, when the second PUSCH overlaps with the Type 1 PUSCH in the time domain, the configured grant for the second PUSCH is ignored by the first HARQ entity; and whether the first PUSCH is the Type 1 PUSCH is related to whether the configured grant for the second PUSCH and the first PDCCH are associated with different coresetPoolIndex values.

As one embodiment, when the configured grant for the second PUSCH and the first PDCCH are associated with different coresetPoolIndex values, the first PUSCH is not the Type 1 PUSCH.

As one embodiment, when the configured grant for the second PUSCH and the first PDCCH are not associated with different coresetPoolIndex values, the first PUSCH is the Type 1 PUSCH.

As one embodiment, when the second PUSCH does not overlap with the Type 1 PUSCH in the time domain, the configured grant for the second PUSCH is not ignored by the first HARQ entity.

As one embodiment, the configured grant for the second PUSCH is delivered to the first HARQ entity.

Those of ordinary skill in the art may appreciate that all or some of the steps in the above method may be completed by instructing relevant hardware by a program, and the program may be stored in a computer-readable storage medium, such as a read-only memory, a hard disk or an optical disk. Optionally, all or some of the steps of the above embodiments may also be implemented using one or more integrated circuits. Correspondingly, each module unit in the above embodiment may be implemented either in a hardware form or in a software functional module form. The present application is not limited to any specific form of combination of hardware and software. A first node device in the present application includes but is not limited to mobile phones, tablet computers, laptops, data cards, low-power devices, eMTC devices, NB-IoT devices, vehicular communication devices, aircrafts, airplanes, drones, remote-controlled aircrafts, and other wireless communication devices. The second node device in the present application includes but is not limited to mobile phones, tablet computers, laptops, data cards, low-power devices, eMTC devices, NB-IoT devices, vehicular communication devices, aircrafts, airplanes, drones, remote-controlled aircrafts, and other wireless communication devices. User equipment or UE or a terminal in the present application includes but is not limited to mobile phones, tablet computers, laptops, network cards, low-power devices, eMTC devices, NB-loT devices, vehicular communication devices, aircrafts, airplanes, drones, remote-controlled aircrafts, and other wireless communication devices. A base station device or a base station or a network-side device in the present application includes but is not limited to macrocellular base stations, microcellular base stations, Femtocells, relay base stations, eNBs, gNBs, transmit/receive points (TRPs), GNSS, relay satellites, satellite base stations, air base stations, test apparatuses, test devices, test instruments, and other devices.

Those skilled in the art should appreciate that the present invention may be practiced in other designated forms without departing from its core or basic features. Therefore, the currently disclosed embodiments should be regarded as descriptive and not restrictive in any way. The scope of the invention is determined by the appended claims rather than the foregoing description, and all modifications within their equivalent meaning and area are considered to have been comprised therein.

## Claims

1. A first node for wireless communication, comprising:
a first receiver receiving a first PDCCH; and
a first transmitter sending at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain.

2. The first node according to claim 1, wherein whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoollndex values.

3. The first node according to claim 1 or 2, wherein when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

4. The first node according to claim 3, comprising:
the first transmitter sending the second PUSCH,
wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

5. The first node according to any one of claims 2 to 4, wherein when the configured grant for the second PUSCH and the first PDCCH are associated with different coresetPoolIndex values, the first PUSCH is not the Type 1 PUSCH.

6. The first node according to any one of claims 2 to 5, wherein when the configured grant for the second PUSCH and the first PDCCH are not associated with different coresetPoolIndex values, the first PUSCH is the Type 1 PUSCH.

7. The first node according to any one of claims 2 to 6, wherein when the second PUSCH overlaps with the Type 1 PUSCH in the time domain, the configured grant for the second PUSCH is not delivered to the first HARQ entity.

8. A second node for wireless communication, comprising:
a second transmitter sending a first PDCCH; and
a second receiver receiving at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoollndex values, and whether the second PUSCH overlaps with the first PUSCH in a time domain.

9. The second node according to claim 8, wherein whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

10. The second node according to claim 8 or 9, wherein when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

11. The second node according to claim 10, comprising:
the second receiver receiving the second PUSCH,
wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

12. The second node according to any one of claims 9 to 11, wherein when the configured grant for the second PUSCH and the first PDCCH are associated with different coresetPoolIndex values, the first PUSCH is not the Type 1 PUSCH.

13. The second node according to any one of claims 9 to 12, wherein when the configured grant for the second PUSCH and the first PDCCH are not associated with different coresetPoolIndex values, the first PUSCH is the Type 1 PUSCH.

14. The second node according to any one of claims 9 to 13, wherein when the second PUSCH overlaps with the Type 1 PUSCH in the time domain, the configured grant for the second PUSCH is not delivered to the first HARQ entity.

15. A method used in a first node for wireless communication, comprising:
receiving a first PDCCH; and
sending at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain.

16. The method used in a first node according to claim 15, wherein whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoollndex values.

17. The method used in a first node according to claim 15 or 16, wherein when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoolIndex values.

18. The method used in a first node according to claim 17, comprising:
sending the second PUSCH,
wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

19. The method used in a first node according to any one of claims 16 to 18, wherein when the configured grant for the second PUSCH and the first PDCCH are associated with different coresetPoollndex values, the first PUSCH is not the Type 1 PUSCH.

20. The method used in a first node according to any one of claims 16 to 19, wherein when the configured grant for the second PUSCH and the first PDCCH are not associated with different coresetPoolIndex values, the first PUSCH is the Type 1 PUSCH.

21. The method used in a first node according to any one of claims 16 to 20, wherein when the second PUSCH overlaps with the Type 1 PUSCH in the time domain, the configured grant for the second PUSCH is not delivered to the first HARQ entity.

22. A method used in a second node for wireless communication, comprising:
sending a first PDCCH; and
receiving at least a first PUSCH in the first PUSCH and a second PUSCH, the first PDCCH being used for scheduling the first PUSCH, and the second PUSCH being a PUSCH of a configured grant,
wherein whether the configured grant for the second PUSCH is delivered to a first HARQ entity is related to both whether the configured grant for the second PUSCH and the first PDCCH are associated with different coresetPoolIndex values, and whether the second PUSCH overlaps with the first PUSCH in a time domain.

23. The method used in a second node according to claim 22, wherein whether the configured grant for the second PUSCH is delivered to the first HARQ entity is related to whether both of the second PUSCH and a Type 1 PUSCH overlap in the time domain, and whether the first PUSCH is the Type 1 PUSCH is related to whether the configured grant for the second PUSCH and the first PDCCH are associated with different coresetPoolIndex values.

24. The method used in a second node according to claim 22 or 23, wherein when the second PUSCH does not overlap with the Type 1 PUSCH in the time domain, the configured grant for the second PUSCH is delivered to the first HARQ entity; and whether the first PUSCH is the Type 1 PUSCH is related to whether the configured grant for the second PUSCH and the first PDCCH are associated with different coresetPoollndex values.

25. The method used in a second node according to claim 24, comprising:
receiving the second PUSCH,
wherein the configured grant for the second PUSCH is delivered to the first HARQ entity; the first HARQ entity obtains an MAC PDU to be sent from a multiplexing and assembly entity, delivers the MAC PDU and the configured grant for the second PUSCH as well as HARQ information of a transport block to a corresponding HARQ process, and indicates the HARQ process to trigger one new transmission; and based on the configured grant for the second PUSCH, the HARQ process indicates a physical layer to generate a transmission of the second PUSCH.

26. The method used in a second node according to any one of claims 23 to 25, wherein when the configured grant for the second PUSCH and the first PDCCH are associated with different coresetPoollndex values, the first PUSCH is not the Type 1 PUSCH.

27. The method used in a second node according to any one of claims 23 to 26, wherein when the configured grant for the second PUSCH and the first PDCCH are not associated with different coresetPoolIndex values, the first PUSCH is the Type 1 PUSCH.

28. The method used in a second node according to any one of claims 23 to 27, wherein when the second PUSCH overlaps with the Type 1 PUSCH in the time domain, the configured grant for the second PUSCH is not delivered to the first HARQ entity.
